# EUROPÄISCHE PATENTANMELDUNG

(11) **EP 1 125 776 A2**
(43) Veröffentlichungstag der Anmeldung: **22.08.2001**
(21) Anmeldenummer: 01101905.6
(22) Anmeldetag: 27.01.2001
(51) Int. Cl.: B60G 17/052

(54) **Luftfedersystem für ein zweiachsiges Kraftfahrzeug**

(30) Priorität: 18.02.2000 DE 10007382
(71) Anmelder: Bayerische Motoren Werke Aktiengesellschaft, 80809 München (DE)
(72) Erfinder: Schoop, Reimar, 80637 München (DE)

(57) **Zusammenfassung**

Die Erfindung betrifft ein Luftfedersystem für ein zweiachsiges Kraftfahrzeug mit einer Druckluftquelle sowie den einzelnen Fahrzeugrädern zugeordneten Steuerventilen, über welche die jeweiligen Fahrzeugrad-Luftfedern wahlweise mit einer mit der Druckluftquelle verbundenen Druckluft-Versorgungsleitung verbindbar sind, wobei für die Luftfedern der Fahrzeug-Vorderachse sowie für diejenigen der Fahrzeug-Hinterachse eigene Druckluft-Leitungszweige vorgesehen sind, die sich zumindest abschnittsweise in ihrem Strömungsquerschnitt unterscheiden, und wobei der Leitungszweig einer der beiden Achsen derart ausgebildet ist, daß sich dessen Strömungsquerschnitt bei Druckluft-Zufuhr in die zugeordneten Luftfedern zumindest abschnittsweise vom Strömungsquerschnitt bei Druckluft-Abfuhr aus den zugeordneten Luftfedern unterscheidet. Bevorzugt besteht derjenige Leitungszweig, dessen Strömungsquerschnitt sich bei Druckluft-Zufuhr von demjenigen bei Druckluft-Abfuhr unterscheidet, aus parallel zueinander geschalteten Teilzweigen mit zumindest abschnittsweise unterschiedlichen Strömungsquerschnitten, wobei zumindest in einem der Teilzweige ein geeignet angeordnetes, diesen Teilzweig nur in einer Strömungsrichtung freigebendes Rückschlagventil vorgesehen ist.

## Beschreibung

Die Erfindung betrifft ein Luftfedersystem für ein zweiachsiges Kraftfahrzeug mit einer Druckluftquelle sowie den einzelnen Fahrzeugrädern zugeordneten Steuerventilen, über welche die jeweiligen Fahrzeugrad-Luftfedern wahlweise mit einer mit der Druckluftquelle verbundenen Druckluft-Versorgungsleitung verbindbar sind, und wobei für die Luftfedern der Fahrzeug-Vorderachse sowie für diejenigen der Fahrzeug-Hinterachse eigene Druckluft-Leitungszweige vorgesehen sind. Zum technischen Umfeld wird beispielshalber auf die EP 0 791 492 A1 verwiesen.

Luftfedersysteme zeichnen sich gegenüber allein mechanisch abgefederten Radaufhängungen durch höhere Flexibilität bzw. größere Variabilitäten aus. So kann bei einem vollständigen Luftfedersystem an einem zwei- oder mehrachsigen Fahrzeug die Höhenlage des Fahrzeugaufbaus gegenüber dem Boden und damit die Bodenfreiheit des Kraftfahrzeuges verändert werden. Üblicherweise kommen dabei sog. offene Luftfedersysteme zum Einsatz, bei denen im Falle eines Absenkens des Fahrzeugaufbaus aus einer angehobenen Position die aus den Luftfedern hierfür abzuführende Luftmasse über eine sog. Entlüftungsleitung in die Atmosphäre, d.h. in die Umgebung abgeführt wird. Da dieses Absenken binnen eines relativ kurzen Zeitraumes erfolgen soll, wird in der eingangs genannten Schrift vorgeschlagen, beim Absenken sog. Kontrollventile, die an sich einen Strömungswiderstand darstellen, in einem Bypass zu umgehen. Für das Befüllen der einzelnen Fahrzeugrad-Luftfedern hingegen wird die vom Kompressor geförderte sowie üblicherweise zusätzlich von einem Speichervolumen entnommene verdichtete Luft über bzw. durch diese Kontrollventile geführt.

Unter anderem wegen ungleicher Verteilung des Fahrzeugaufbau-Gewichts kann sich der sog. statische Luftdruck in den der Fahrzeug-Vorderachse zugeordneten Luftfedern von demjenigen der Hinterachs-Luftfedern unterscheiden. Wenn nun sowohl die Luftfedern der Vorderachse des Kraftfahrzeuges als auch diejenigen der Fahrzeug-Hinterachse ausgehend von einem abgesenkten Fahrzeugaufbau-Niveau mit zusätzlicher Luft befüllt werden sollen, um den Fahrzeugaufbau in ein angehobenes Niveau zu überführen, so würde diese Befüllung der Vorderachs-Luftfedern und der Hinterachs-Luftfedern aufgrund der genannten Druckunterschiede mit unterschiedlicher Geschwindigkeit erfolgen, so daß während des quasi Hochpumpens des Fahrzeugaufbaus dieser gegenüber der Horizontalen geneigt werden würde.

Beispielsweise läge der statische Luftdruck in den Luftfedern der Hinterachse betragsmäßig über demjenigen der Vorderachse. Dann würde bei einem Anheben bzw. Hochpumpen des Fahrzeugaufbaus dieser nach hinten abfallend geneigt werden. Gleiches stellt sich bei einem Absenken des Fahrzeugaufbaus, resultierend aus einer partiellen Luftentnahme aus den Luftfedern, ein, da dann die hinteren Luftfedern aufgrund des positiven Druckgefälles gegenüber den vorderen Luftfedern schneller entleert werden würden bzw. im Extremfall sogar die vorderen Luftfedern mit Luft aus den hinteren Luftfedern befüllt werden könnten.

Eine Abhilfemaßnahme für diese geschilderte Problematik aufzuzeigen, ist Aufgabe der vorliegenden Erfindung.

Die Lösung dieser Aufgabe ist dadurch gekennzeichnet, daß sich der oder die den Luftfedern der Fahrzeug-Vorderachse zugeordnete(n) Druckluft-Leitungszweig(e) in seinem/ihrem Strömungsquerschnitt zumindest abschnittsweise von dem oder den den Luftfedern der Fahrzeug-Hinterachse zugeordnete(n) Druckluft-Leitungszweig(e) unterscheidet bzw. unterscheiden, und wobei der Leitungszweig einer der beiden Achsen derart ausgebildet ist, daß sich dessen Strömungsquerschnitt bei Druckluft-Zufuhr in die zugeordneten Luftfedern zumindest abschnittsweise vom Strömungsquerschnitt bei Druckluft-Abfuhr aus den zugeordneten Luftfedern unterscheidet.

Ein besonders einfaches und daher vorteilhaftes erfindungsgemäßes Luftfedersystem erhält man dann, wenn derjenige Leitungszweig, dessen Strömungsquerschnitt sich bei Druckluft-Zufuhr von demjenigen bei Druckluft-Abfuhr unterscheidet, aus parallel zueinander geschalteten Teilzweigen mit zumindest abschnittsweise unterschiedlichen Strömungsquerschnitten besteht, wobei zumindest in einem der Teilzweige ein geeignet angeordnetes, diesen Teilzweig nur in einer Strömungsrichtung freigebendes Rückschlagventil vorgesehen ist.

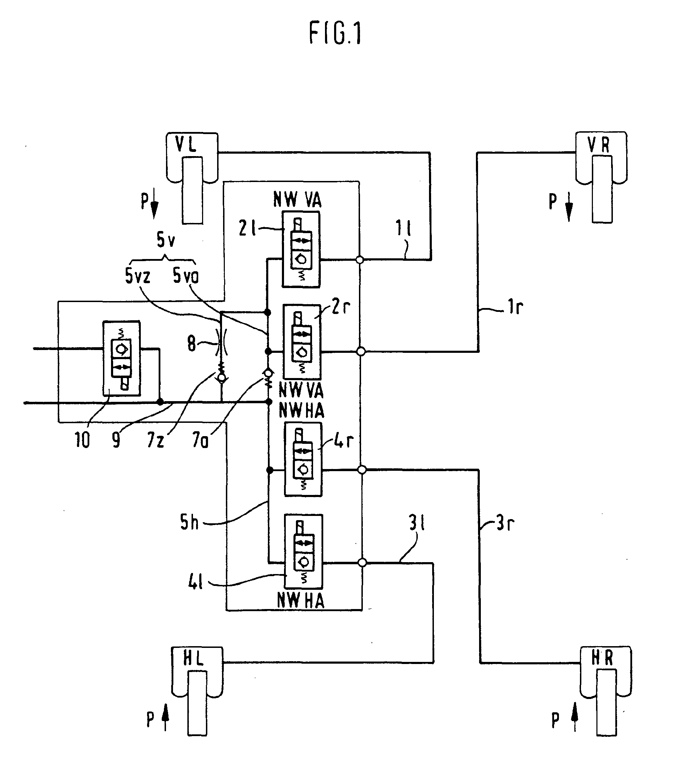

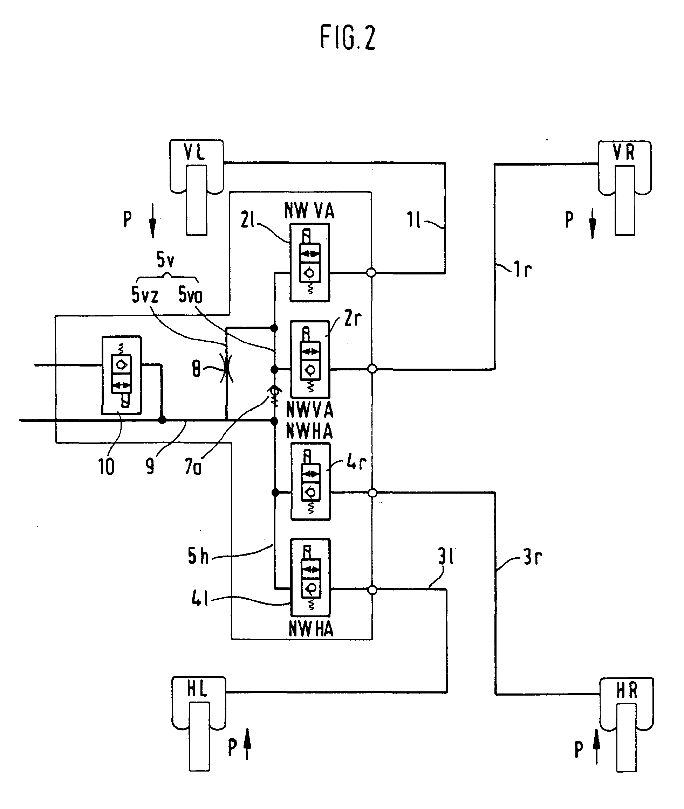

Näher erläutert wird die Erfindung anhand zweier bevorzugter Ausführungsbeispiele, wobei ausdrücklich darauf hingewiesen sei, daß die Erfindung nicht auf diese Ausführungsbeispiele beschränkt ist. Wesentlich sind vielmehr die im Patentanspruch angegebenen Merkmale, auf die in der weiteren Beschreibung noch detailliert eingegangen wird. In den beigefügten Figuren 1, 2 ist jeweils ein relevanter Ausschnitt eines erfindungsgemäßen Luftfeder-systemes in Form eines Pneumatik-Schaltplanes dargestellt.

In beiden Figurendarstellungen ist mit der Buchstabenfolge VL die Luftfeder des linken Vorderrades und mit der Buchstabenfolge VR diejenige des rechten Vorderrades eines vierrädrigen, zweiachsigen Kraftfahrzeuges bezeichnet. Über eine Druckluftleitung 1l kann die Luftfeder VL und über eine Druckluftleitung 1r die Luftfeder VR mit Druckluft versorgt werden (und zwar ausgehend von einer nicht dargestellten Druckluftquelle) und somit befüllt bzw. zumindest partiell entleert werden. In der Druckluftleitung 1l ist ein Steuerventil 2l und in der Druckluftleitung 1r ein Steuerventil 2r vorgesehen. Jenseits dieser Steuerventile 2l und 2r sind die beiden Druckluftleitungen 1l und 1r zu einem Druckluft-Leitungszweig 5v zusammengeführt.

Mit der Buchstabenfolge HL ist die Luftfeder des linken Hinterrades und mit der Buchstabenfolge HR diejenige des rechten Hinterrades des vierrädrigen, zweiachsigen Kraftfahrzeuges bezeichnet. Über eine Druckluftleitung 3l kann (ebenfalls ausgehend von der bereits kurz genannten Druckluftquelle) die Luftfeder HL und über eine Druckluftleitung 3r die Luftfeder HR mit Druckluft versorgt und somit befüllt bzw. zumindest partiell entleert werden. In der Druckluftleitung 3l ist ein Steuerventil 4l und in der Druckluftleitung 3r ein Steuerventil 4r vorgesehen. Jenseits dieser Steuerventile 4l und 4r sind die beiden Druckluftleitungen 3l und 3r zu einem Druckluft-Leitungszweig 5h zusammengeführt.

Der für die Vorderachse zusammengeführte Druckluft-Leitungszweig 5v besteht seinerseits wieder aus zwei pneumatisch parallel zueinander geschalteten Teilzweigen 5vz und 5va. Beim Ausführungsbeispiel nach **Figur 1** ist im Teilzweig 5va ein in Richtung zu den Steuerventilen 2l, 2r hin sperrendes Rückschlagventil 7a vorgesehen und im Teilzweig 5vz ist neben einem in Richtung zu den Steuerventilen 2l, 2r hin freigebenden und somit in Gegenrichtung sperrenden Rückschlagventil 7z eine Drosselstelle 8 vorgesehen. Im Ausführungsbeispiel nach **Figur 2** befindet sich nur im Teilzweig 5va ein in Richtung zu den Steuerventilen 2l, 2r hin sperrendes Rückschlagventil7a, während im Teilzweig 5vz lediglich eine Drosselstelle 8 vorgesehen ist. Bei beiden Ausführungsbeispielen (d.h. in den **beiden Figuren**) münden die beiden Teilzweige 5vz und 5va des Druckluft-Leitungszweiges 5v sowie der Druckluft-Leitungszweig 5h schließlich mit ihrem den jeweiligen Steuerventilen 2l bzw. 2r bzw. 4l bzw. 4r abgewandten Enden in einer Druckluft-Versorgungsleitung 9.

Die Druckluft-Versorgungsleitung 9 weist einen im wesentlichen direkt zu einer nicht dargestellten Kompressoreinheit führenden Zweig sowie einen davon abzweigenden, über ein sog. Speicherventil 10 zu einem ebenfalls nicht dargestellten Speichervolumen führenden Zweig auf, wobei das Speichervolumen zusammen mit der Kompressoreinheit die bereits genannte Druckluftquelle bilden. Deren detaillierter Aufbau ist jedoch unerheblich; wesentlich ist vielmehr, daß über die Druckluft-Versorgungsleitung 9 ein Strom von Druckluft herangeführt werden kann, mit welchem bei geöffneten Steuerventilen 2l, 2r, 4l, 4r die einzelnen Luftfedern VL, VR, HL, HR über eine Grundfüllung hinaus zusätzlich befüllt werden können, wenn der Fahrzeug-Aufbau, der von diesen Luftfedern VL, VR, HL, HR getragen wird, angehoben werden soll. Soll hingegen der (nicht dargestellte) Fahrzeug-Aufbau ausgehend von einer angehobenen Position abgesenkt werden, so kann bei geöffneten Steuerventilen 2l, 2r, 4l, 4r sowie bei geschlossenem Speicherventil 10 über die Druckluft-Versorgungsleitung 9 ein Teil der Luftmasse aus den Luftfedern VL, VR, HL, HR abgeführt werde, wozu selbstverständlich in der Druckluft-Versorgungsleitung 9 ein entsprechend niedriges Druckniveau herrschen muß, was auf nicht gezeigte Weise, bspw. durch Verbindung mit der Umgebung, einfach herstellbar ist. Soll schließlich die Höhe des Fahrzeug-Aufbaus unverändert bleiben, so sind die Steuerventile 2l, 2r, 4l, 4r geschlossen.

Wie durch den Buchstaben p mit darauf folgendem Pfeil ↑ bzw. ↓ dargestellt ist, ist das Druckniveau in den der Fahrzeug-Vorderachse zugeordneten Luftfedern VL und VR geringer als dasjenige in den der Fahrzeug-Hinterachse zugeordneten Luftfedern HL und HR. Ferner ist noch wesentlich, daß der der Vorderachse zugeordnete Druckluft-Leitungszweig 5v oder die sich daran anschließenden Druckluftleitungen 1l und 1r zumindest abschnittsweise einen anderen Strömungsquerschnitt besitzen als der der Hinterachse zugeordnete Druckluft-Leitungszweig 5h oder die sich daran anschließenden Druckluftleitungen 31 und 3r. Umgesetzt ist dies hier durch unterschiedliche Nennweiten in den Steuerventilen 2l, 2r, 4l, 4r, die durch die Buchstabenfolge "NW VA" für die Vorderahcse bzw. "NW HA" für die Fahrzeug-Hinterachse angegeben sind. Dabei ist die Nennweite "NW VA" größer als die Nennweite "NW HA".

Zunächst sei nun ein gewünschtes Absenken des Fahrzeug-Aufbaus ausgehend von einer angehobenen Position beschrieben. Hierfür muß Luft aus sämtlichen Luftfedern VL, VR, HL, HR abgezogen werden. Da der Druck p in den hinteren Luftfedern HL, HR höher ist als in den vorderen Luftfedern VL,VR, würden sich grundsätzlich die hinteren Luftfedern HL, HR schneller, d.h. binnen einer kürzeren Zeitspanne in die Druckluft-Versorgungsleitung 9 (und über diese letztlich in die Umgebung) entleeren, als die vorderen Luftfedern VL, VR. Eine Schrägstellung des Fahrzeug-Aufbaus, nämlich nach hinten abfallend, wäre hiervon die Folge. Um dies zu verhindern, ist die Nennweite der hinteren Steuerventile 4r, 4l mit dem Wert "NW HA" geringer als diejenige der vorderen Steuerventile 2l, 2r mit dem Wert "NW VA", was gleichbedeutend damit ist, daß der Strömungsquerschnitt des hinteren Druckluft-Leitungszweiges 5h abschnittsweise geringer ist als derjenige des vorderen Druckluft-Leitungszweiges 5v. Aufgrund des unterschiedlichen Strömungsquerschnittes bzw. damit verbunden des unterschiedlichen Strömungswiderstandes (nämlich in den jeweiligen Steuerventilen) erfolgt nun jedoch an den vorderen Luftfedern VL, VR und an den hinteren Luftfedern HL, HR eine gleich intensive Entleerung bzw. Luftmassenabfuhr, so daß der Fahrzeug-Aufbau beim Absenken keine Neigung erfährt, sondern an allen vier Rädern (bzw. allen vier Luftfedern VL, VR, HL, HR) gleich stark abgesenkt wird.

Beim Ausführungsbeispiel nach **Figur 1** erfolgt eine Luftabfuhr aus den vorderen Luftfedern VL und VR nur über den Teilzweig 5va, in dem anders als im Teilzweig 5vz keine zusätzliche Drosselstelle vorhanden ist, da das Rückschlagventil 7v bei einer Luftabfuhr aus den Luftfedern VL und VR den Teilzweig 5vz absperrt, während das Rückschlagventil 7a bei einer Luftabfuhr aus den Luftfedern VL und VR den Teilzweig 5va freigibt. Eine Luftzufuhr zu den vorderen Luftfedern VL und VR ist wegen des Rückschlagventiles 7a nur über den die Drosselstelle 8 enthaltenden Teilzweig 5vz möglich. Letzteres gilt auch für das Ausführungsbeispiel nach **Figur 2,** bei welchem jeodch eine Luftabfuhr aus den vorderen Luftfedern VL, VR über beide Teilzweige 5va und 5vz erfolgen kann, nachdem hier im Teilzweig 5vz kein sperrendes Rückschlagventil vorhanden ist.

Im Folgenden wird nun für beide Ausführunsgbeispiele, d.h. für **beide Figuren** gemeinsam ein gewünschtes Anheben des Fahrzeug-Aufbaus ausgehend von einer abgesenkten Position beschrieben. Hierfür muß Luft in sämtliche Luftfedern VL, VR, HL, HR eingeführt werden. Da der Druck p in den hinteren Luftfedern HL, HR höher ist als in den vorderen Luftfedern VL,VR, und da - wie bereits erläutert - zusätzlich der Strömungsquerschnitt im hinteren Druckluft-Leitungszweig 5h ( bzw. in den hinteren Steuerventilen 41, 4r mit der Nennweite "NW HA") geringer ist als im vorderen Druckluft-Leitungszweig 5v ( bzw. in den vorderen Steuerventilen 2l, 2r mit der Nennweite "NW VA"), würden die hinteren Luftfedern HL, HR erheblich langsamer, d.h. binnen einer erheblich längeren Zeitspanne befüllt werden, als die vorderen Luftfedern VL, VR. Eine extreme Schrägstellung des Fahrzeug-Aufbaus, nämlich abermals nach hinten abfallend, wäre hiervon die Folge.

Um dies zu verhindern, ist im Teilzweig 5vz, über den die Befüllung der vorderen Luftfedern VL, VR erfolgt, die bereits besagte Drosselstelle 8 vorhanden. Diese Drosselstelle 8 ist derart dimensioniert, daß die nur über den bei einer Befüllung der vorderen Luftfedern VL, VR vom Rückschlagventil 7z freigegebenen Teilzweig 5vz zuströmende Luftmasse derart gedrosselt wird und somit derart gedrosselt in die vorderen Luftfedern VL, VR gelangt, daß der Fahrzeug-Aufbau vorne und hinten in gleichem Maße angehoben wird und somit keine Schrägstellung des Fahrzeug-Aufbaus erfolgt. Während dabei - wie ersichtlich - das Rückschlagventil 7v bei einer Luftzufuhr in die Luftfedern VL und VR den Teilzweig 5vz freigibt, sperrt das Rückschlagventil 7a bei dieser Luftzufuhr den Teilzweig 5va, der keinen zusätzlichen Strömungswiderstand enthält, ab.

Bei einer Luftabfuhr aus allen Luftfedern VL, VR, HL, HR hingegen wird bei beiden Ausführungsbeispielen die Luft aus den Vorderachs-Luftfedern VL und VR über den dann freigegebenen Teilzweig 5va abgeführt, in welchem keine Drosselstelle vorhanden ist. Beim Ausführungsbeipsiel nach **Figur 2** kann zusätzlich Luft über den Teilzweig 5vz abgeführt werden, wobei die Drosselstelle 8 wegen des freigegebenen Teilzweiges 5va jedoch nicht wirksam wird. Die ergriffenen Maßnahmen zur Vermeidung einer Schrägstellung des Fahrzeug-Aufbaus beim Absenken, nämlich die unterschiedlichen Nennweiten "NW-VA" und "NW-HA",wurden dabei weiter oben bereits erläutert. In diesem Zusammenhang sei ausdrücklich darauf hingewiesen, daß diese detaillierte Erläuterung so nur dann Gültigkeit hat, wenn das Druckniveau in den Hinterachs-Luftfedern HR und HL höher ist als dasjenige in den Vorderachs-Luftfedern VL und VR. Bei umgekehrten Verhältnissen können jedoch die Teilzweige 5va und 5vz in entsprechender Weise für die Versorgung der Hinterachs-Luftfedern HL und HR vorgesehen sein. Dabei ist es sogar möglich, eine Umschaltmimik vorzusehen, mit Hilfe derer diese Teilzweige 5va und 5vz mit dem Drosselelement 8 wahlweise der Vorderachse oder der Hinterachse des Kraftfahrzeuges zugeordnet werden können.

Wie aus dieser Erläuterung ersichtlich wird, kann mit einem erfindungsgemäßen Luftfedersystem auf einfache Weise sichergestellt werden, daß sowohl beim Anheben des Fahrzeug-Aufbaus als auch beim Absenken desselben trotz unterschiedlicher Druckniveaus in den vorderen Luftfedern VL, VR und den hinteren Luftfedern HL, HR keine Neigung des Fahrzeug-Aufbaus erfolgt. Vielmehr wird der Fahrzeug-Aufbau an allen Luftfedern VL, VR, HL, HR zumindest im wesentlichen gleichermaßen angehoben oder abgesenkt.

Wesentlich ist hierfür, daß sich der den Luftfedern VL, VR der Fahrzeug-Vorderachse zugeordnete Druckluft-Leitungszweig 5v oder die sich daran anschließenden Druckluftleitungen 1l und 1r in seinem bzw. ihrem Strömungsquerschnitt zumindest abschnittsweise von dem den Luftfedern HL, HR der Fahrzeug-Hinterachse zugeordneten Druckluft-Leitungszweig 5h oder den sich daran anschließenden Druckluftleitungen 4r, 4l wie beschrieben unterscheiden, wobei der Leitungszweig einer der beiden Achsen, hier der Leitungszweig 5v, derart ausgebildet ist, daß sich dessen Strömungsquerschnitt bei Druckluft-Zufuhr in die zugeordneten Luftfedern VL, VR zumindest abschnittsweise vom Strömungsquerschnitt bei Druckluft-Abfuhr aus den zugeordneten Luftfedern VL, VR unterscheidet, und zwar jeweils in der angegebenen Weise. Selbstverständlich sind dann, wenn das Druckniveau p in den vorderen Luftfedern VL, VR höher ist als in den hinteren Luftfedern HL, HR, die Verhältnisse (bezüglich der jeweiligen Strömungsquerschnitte) umgekehrt. Ferner sei noch darauf hingewiesen, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Luftfedersystem für ein zweiachsiges Kraftfahrzeug mit einer Druckluftquelle sowie den einzelnen Fahrzeugrädern zugeordneten Steuerventilen (2l, 2r, 4l, 4r), über welche die jeweiligen Fahrzeugrad-Luftfedern (VL, VR, HL, HR) wahlweise mit einer mit der Druckluftquelle verbundenen Druckluft-Versorgungsleitung (9) verbindbar sind, wobei für die Luftfedern (VL, VR) der Fahrzeug-Vorderachse sowie für die Luftfedern (HL, HR) der Fahrzeug-Hinterachse eigene Druckluft-Leitungszweige (5v, 5h) vorgesehen sind, die sich zumindest abschnittsweise in ihrem Strömungsquerschnitt unterscheiden, und wobei der Leitungszweig (5v) einer der beiden Achsen derart ausgebildet ist, daß sich dessen Strömungsquerschnitt bei Druckluft-Zufuhr in die zugeordneten Luftfedern (VL, VR) zumindest abschnittsweise vom Strömungsquerschnitt bei Druckluft-Abfuhr aus den zugeordneten Luftfedern (VL, VR) unterscheidet.

2. Luftfedersystem nach Anspruch 1,
dadurch gekennzeichnet, daß derjenige Leitungszweig (5v), dessen Strömungsquerschnitt sich bei Druckluft-Zufuhr von demjenigen bei Druckluft-Abfuhr unterscheidet, aus parallel zueinander geschalteten Teilzweigen (5va, 5vz) mit zumindest abschnittsweise unterschiedlichen Strömungsquerschnitten besteht, wobei zumindest in einem der Teilzweige (5va, 5vz) ein geeignet angeordnetes, diesen Teilzweig nur in einer Strömungsrichtung freigebendes Rückschlagventil (7a, 7z) vorgesehen ist.
